# EUROPEAN PATENT SPECIFICATION

(11) **EP 3 045 256 B1**
(45) Date of publication and mention of the grant of the patent: **17.04.2019**
(21) Application number: 15193797.6
(22) Date of filing: 10.11.2015
(51) Int. Cl.: B23K 26/04

(54) **THREE-DIMENSIONAL LASER PROCESSING APPARATUS AND POSITIONING ERROR CORRECTION METHOD**
DREIDIMENSIONALE LASERBEARBEITUNGSVORRICHTUNG UND POSITIONIERUNGSFEHLERKORREKTURVERFAHREN
APPAREIL DE TRAITEMENT LASER TRIDIMENSIONNEL ET PROCÉDÉ DE CORRECTION D'ERREUR DE POSITIONNEMENT

(30) Priority: 20.11.2014 TW 103140242
(43) Date of publication of application: 20.07.2016
(73) Proprietor: Industrial Technology Research Institute, Chutung Hsinchu 31040 (TW)
(72) Inventor: LU, Shao-Chuan, 504 Changhua County (TW); LIN, Yu-Chung, 710 Tainan City (TW); TSENG, Jie-Ting, 700 Tainan City (TW); LEE, Min-Kai, 721 Tainan City (TW)
(74) Representative: Becker Kurig Straus

(56) References cited:
- CN-A- 103 801 826
- US-A1- 2003 002 055
- US-A1- 2006 054 608
- US-A1- 2014 333 931

## Description

### TECHNICAL FIELD

The technical field relates to a three-dimensional laser processing apparatus (see, for example, CN 103 801 826) and a positioning error correction method (see, for example, US 2003/0002055).

### BACKGROUND

In many processes of processing fine materials, the conventional processing technologies can no longer satisfy the needs. Thus, the laser micro-processing technologies need to be adopted to cope with the needs of the processes. In the fine processing processes, processing with visual positioning may yield a highly precise product of processing.

In general, a laser processing system with a scanning mirror is controlled by using a reflective mirror to change an incident angle of a laser beam, so as to control the laser beam to a predetermined processing position of a workpiece. Thus, if a mirror system is adopted to process a workpiece having a three-dimensional surface, a two-dimensional mirror processing distortion and a three-dimensional zooming offset may arise, making laser processing defocused and the processing dimensions imprecise.

Besides, when the coaxial visual technology is adopted, an object being processed may be imaged in a charge-coupled device (CCD) for visual positioning. However, since the laser beam and visible light have different bands, making the optical axes of the laser beam and the visible light different, thus resulting in an error in the optical path length or other potential errors. These errors may cause a visual error of the image in the charge-coupled device and make the positioning less precise.

Thus, how to use laser to precisely process on a three-dimensional surface and correct the positioning error of a laser visual module are certainly issues that researchers should work on.

US 2003/002055 A1 discloses a method for calibrating the optical system of a laser machine having a laser source, a deflecting unit and an imaging unit. Firstly, a first sample plate is arranged in the focal plane of the imaging unit, with prescribed grid points being marked by the laser beam. After that, the marked points are measured by means of a camera, and their position values are compared with the prescribed position values of the target points, in order to derive first correction values from this and store them. After that, a second sample plate is arranged in a second calibrating plane, at a distance from the focal plane, and is targeted by the laser beam and provided with markings. The second sample plate is measured by the camera, and the measured positions of the markings are compared with the positions of the target points, in order to derive second correction values and store them. From the stored first and second correction values of the two planes, correction values can then be determined by interpolation for arbitrary target points in the spatial region between the focal plane and the second calibrating plane and be used for the activation of the deflecting unit.

### SUMMARY

The present invention is provided by appended claims 1 and 16. Beneficial embodiments are provided in the dependent claims. Accordingly, a three-dimensional laser processing apparatus according to an embodiment of the disclosure includes a laser source, a zoom lens set, a scanning mirror module, a visual module unit, and a control unit. The laser source provides a laser beam. The zoom lens set is located on a transmitting path of the laser beam. The scanning mirror module is located on the transmitting path of the laser beam. The laser beam is focused on a three-dimensional working area through the zoom lens set and the scanning mirror module. The three-dimensional working area has a plurality of reference planes, and the reference planes are perpendicular to a first direction. The visual module unit includes an imaging lens set and an image detector. The imaging lens set is located between the three-dimensional working area and the image detector, and the image detector has a visible area. The control unit is electrically connected to the zoom lens set and the scanning mirror module. The control unit adjusts the zoom lens set and the scanning mirror module, such that the laser beam is correspondingly focused on the reference planes, and a plurality of positions of an image in the three-dimensional working area are correspondingly focused and imaged on a center of the visible area through the zoom lens set and the imaging lens set.

A positioning error correction method according to an embodiment of the disclosure is suitable for correcting a plurality of positioning errors of a three-dimensional laser processing apparatus. The method includes following steps. (a) A laser beam is made focused on a three-dimensional working area through a zoom lens set and a scanning mirror module sequentially. The three-dimensional working area has a plurality of reference planes, and the reference planes are perpendicular to a first direction. (b) A first parameter of the zoom lens set is adjusted, such that the laser beam is correspondingly focused on one of the reference planes, (c) The first parameter is recorded to create a laser offset compensation table. (d) A correction test piece is provided. In addition, the correction test piece is moved to one of the reference planes, and the correction test piece has a correction pattern. (e) The laser offset compensation table is loaded and a plurality of second parameters of the scanning mirror module are correspondingly adjusted, such that a plurality of correction points of the correction pattern are separately and correspondingly focused and imaged on a center of a visible area of an image detector through the zoom lens set and an imaging lens set. (f) The second parameters are recorded to create a visual distortion compensation table. (g) A processing test piece is provided. The processing test piece is disposed on one of the reference planes. (h) The laser offset compensation table is loaded and the first parameter corresponding to the reference plane is read, so as to process and form an alignment pattern. (i) The visual distortion compensation table is loaded and a plurality of third parameters of the scanning mirror module are correspondingly adjusted, such that a plurality of alignment points of the alignment pattern are separately and correspondingly focused and imaged on the center of the visible area of the image detector through the zoom lens set and the imaging lens set; and (j) The third parameters are recorded to create a laser distortion compensation table.

Several exemplary embodiments accompanied with figures are described in detail below to further describe the disclosure in details.

### BRIEF DESCRIPTION OF THE DRAWINGS

The accompanying drawings are included to provide further understanding, and are incorporated in and constitute a part of this specification. The drawings illustrate exemplary embodiments and, together with the description, serve to explain the principles of the disclosure.
FIG. 1 is a schematic view illustrating a framework of a three-dimensional laser processing apparatus according to an embodiment of the disclosure.
FIG. 2 is a schematic view illustrating the scanning mirror module of FIG. 1.
FIG. 3 is a flowchart illustrating a positioning error correction method according to an embodiment of the disclosure.
FIG. 4 is a schematic side view illustrating the three-dimensional working area of FIG. 1.
FIG. 5 is a flowchart illustrating a part of the positioning error correction method of FIG. 2.
FIG. 6A is a schematic front view illustrating the correction test piece of FIG. 5.
FIG. 6B is a schematic front view illustrating an image of the sub-correction pattern of FIG. 6A in a visible area.
FIG. 6C is a schematic view illustrating a relative movement path of the correction pattern of FIG. 6A between the working area and the visible area.
FIGs. 6D and 6E are schematic front views illustrating the image of the sub-correction pattern of FIG. 6A in the visible area.
FIG. 7 is a flowchart illustrating a part of the positioning error correction method of FIG. 2.
FIG. 8 is a schematic front view illustrating the alignment pattern of FIG. 7.
FIGs. 9A to 9C are schematic side view illustrating another three-dimensional working area of FIG. 1.

### DETAILED DESCRIPTION OF DISCLOSED EMBODIMENTS

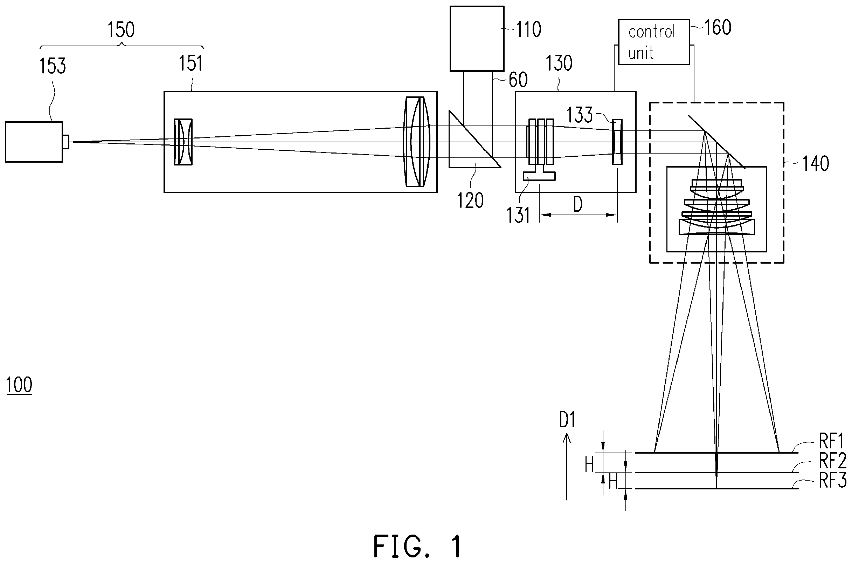

FIG. 1 is a schematic view illustrating a framework of a three-dimensional laser processing apparatus according to an embodiment of the disclosure. Referring to FIG. 1, a three-dimensional laser processing apparatus 100 of this embodiment includes a laser source 110, a light dividing unit 120, a zoom lens set 130, a scanning mirror module 140, a visual module unit 150, and a control unit 160. Specifically, the laser source 110 is configured to provide a laser beam 60. The light dividing unit 120 is located on a transmitting path of the laser beam 60, and the laser beam 60 may be transmitted to the zoom lens set 130 by the light dividing unit 120.

Specifically, as shown in FIG. 1, in this embodiment, the zoom lens set 130 includes at least two lenses 131 and 133. A focal length of the lens 131 is positive, while a focal length of the lens 133 is negative. Alternatively, the focal length of the lens 133 is positive, and the focal length of the lens 131 is negative. More specifically, in this embodiment, the zoom lens set 130 has a lens distance D, and a length of the lens distance D is a sum of the focal lengths of the at least two lenses 131 and 133. Furthermore, in this embodiment, the zoom lens set 130 meets 0.1≦|f2/f1|≦10, wherein f1 is the focal length of the lens 131, and f2 is the focal length of the lens 133. Accordingly, the zoom lens set 130 may adjust an effective focal length of the zoom lens set 130 by changing the distance between the lenses 131 and 133, so as to provide a zooming effect.

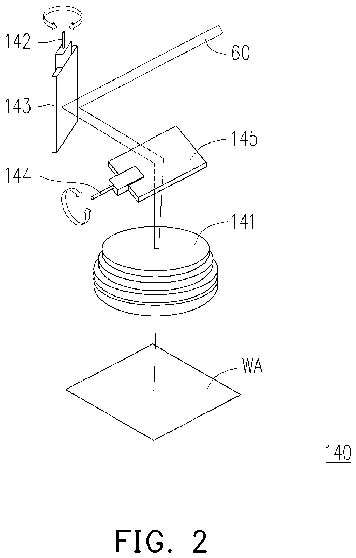

FIG. 2 is a schematic view illustrating the scanning mirror module of FIG. 1. As shown in FIG. 2, in this embodiment, the scanning mirror module 140 has a focusing lens set 141 and two reflective mirrors 143 and 145. More specifically, as shown in FIG. 2, the reflective mirrors 143 and 145 of the scanning mirror module 140 are respectively connected to two rotary mechanisms 142 and 144. The rotary mechanisms 142 and 144 may rotate the reflective mirrors 143 and 145, so as to reflect the laser beam 60. For example, the rotary mechanisms 142 and 144 are galvanometer motors. However, the disclosure is not limited thereto. Specifically, as shown in FIGs. 1 and 2, the zoom lens set 130 and the scanning mirror module 140 are located on the transmitting path of the laser beam 60. When the laser beam 60 is transmitted to the scanning mirror module 140 through the zoom lens set 130, the laser beam 60 may be reflected by the reflective mirrors 143 and 145 of the scanning mirror module 140 and then be deflected to be focused on a three-dimensional working area WA.

More specifically, as shown in FIGs. 1 and 2, in this embodiment, the three-dimensional working area WA has a plurality of reference planes RF1, RF2, and RF3. In addition, the reference planes RF1, RF2, and RF3 are perpendicular to a first direction D1. Besides, in this embodiment, pitches H between the reference planes RF1, RF2, and RF3 are equal to each other. More specifically, in this embodiment, since the focal length of the zoom lens set 130 is variable, the laser beam 60 may be focused on different positions of different reference planes RF1, RF2, and RF3 in the three-dimensional working area WA through the zoom lens set 130 and the scanning mirror module 140, so as to perform a three-dimensional surface processing to a workpiece. In this embodiment, even though the positions and the number of the reference planes RF1, RF2, and RF3 are described as the reference planes RF1, RF2, and RF3 having the same pitch H, for example, the disclosure does not intend to limit the number of the reference planes RF1, RF2, and RF3, nor the length of the pitch H between the reference planes RF1, RF2, and RF3. Namely, in other viable embodiments, the number of the reference planes may be different, and the pitches between the respective reference planes may be identical to or different from each other. The disclosure is not limited thereto.

Besides, in this embodiment, the visual module unit 150 includes an imaging lens set 151 and an image detector 153. In addition, the imaging lens set 151 is located between the three-dimensional working area WA and the image detector 153, and the image detector 153 has a visible area AA. Specifically, as shown in FIG. 1, visible light at at least a portion of a waveband of an image in the three-dimensional working area WA is transmitted to an image sensing unit through the zoom lens set 130, and the image is formed in the visible area AA of the image sensing unit. In this way, since an observation optical axis and a laser optical axis are coaxial, the center of the image shown in the image sensing unit is a focal point of the laser beam 60.

More specifically, as shown in FIG. 1, the control unit 160 is electrically connected to the zoom lens set 130 and the scanning mirror module 140, and may adjust the zoom lens set 130 and the scanning mirror module 140. More specifically, the control unit 160 may adjust a parameter of the zoom lens set 130 and a parameter of the scanning mirror module 140. Here, the parameter of the zoom lens set 130 is a focal length parameter of the zoom lens set 130, and the parameter of the scanning mirror module 140 is an angle parameter or a position parameter of the reflective mirrors 143 and 145. Furthermore, in this embodiment, since the zoom lens set 130 and the visual module unit 150 are in a serially connected structure, when the parameter of the zoom lens set 130 is adjusted, the focal point of the laser beam 60 on the reference planes RF1, RF2, and RF3 and an imaging focal point in the visible area AA are adjusted as well. Accordingly, the laser beam 60 is correspondingly focused on the reference planes RF1, RF2, and RF3 through the zoom lens set 130 and the scanning mirror module 140. Moreover, a plurality of positions of an image in the three-dimensional working area WA may also be correspondingly focused and imaged on the center of the visible area AA through the zoom lens set 130 and the imaging lens set 151. Accordingly, the three-dimensional laser processing apparatus 100 is capable of providing an effect of "what you see is what you hit" and effectively reducing a positioning error and an image calculation error.

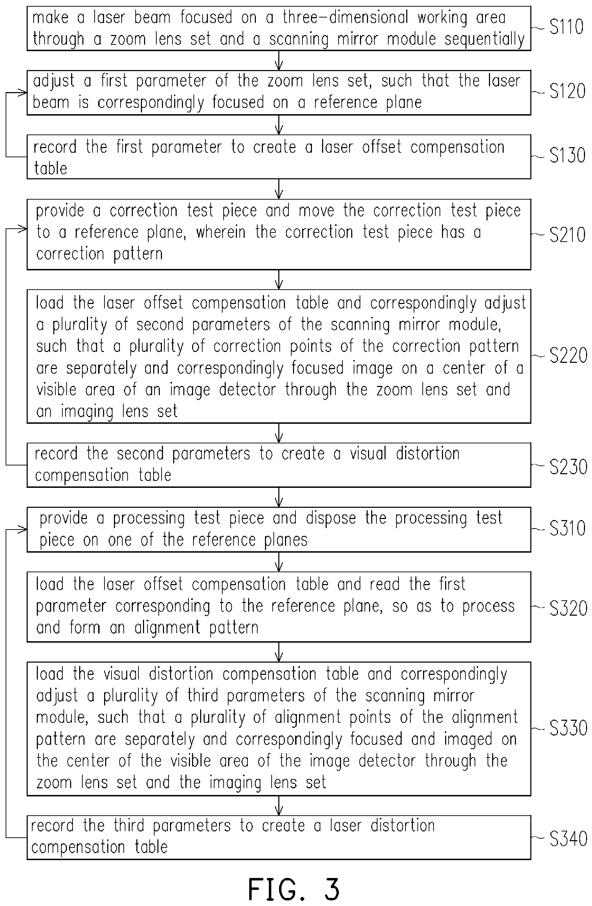

In the following, a positioning error correction method is described in detail with reference to FIG. 3.

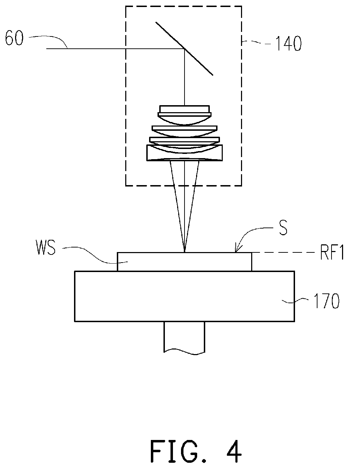

FIG. 3 is a flowchart illustrating a positioning error correction method according to an embodiment of the disclosure. Referring to FIG. 3, in this embodiment, the positioning error correction method may be performed by the three-dimensional laser processing apparatus 100 shown in FIG. 1. However, the disclosure is not limited thereto. Besides, the positioning error correction method may also be performed by a computer program product (including programming commands for performing the positioning error correction method) loaded into the three-dimensional laser processing apparatus 100 and relevant hardware. However, the disclosure is not limited to, either. The positioning error correction method of this embodiment may correct a plurality of positioning errors of the three-dimensional laser processing apparatus 100. In the following, a method including Steps S110, S120, and S130 is described in detail with reference to FIG. 4.

FIG. 4 is a schematic side view illustrating the three-dimensional working area of FIG. 1. First of all, referring to FIGs. 1 to 4, Step S110 is performed to focus the laser beam 60 on the three-dimensional working area WA through the zoom lens set 130 and the scanning mirror module 140 sequentially. For example, as shown in FIG. 4, making the laser beam 60 correspondingly focused on the three-dimensional working area WA in this embodiment may include providing a moving platform 170 located in the three-dimensional working area WA. A surface S of the movable platform 170 is movable to a position of the reference plane RF1 along the first direction D1. Then, Step S120 is performed to adjust a first parameter of the zoom lens set 130, such that the laser beam 60 is correspondingly focused on the reference plane RF1, i.e., focused on the surface S of the movable platform 170. However, the disclosure is not limited thereto.

Then, Step S130 is performed to record the first parameters when the laser beam 60 is correspondingly focused on the reference planes RF1, RF2, and RF3, so as to create a laser offset compensation table. Besides, in this embodiment, Step S120 may be repetitively performed a plurality of times, and the reference planes RF1, RF2, and RF3 in the repetitively performed Step S120 are different from each other, so as to record the respective first parameters corresponding to the respective reference planes RF1, RF2, and RF3 and collect the first parameters in the laser offset compensation table for further references.

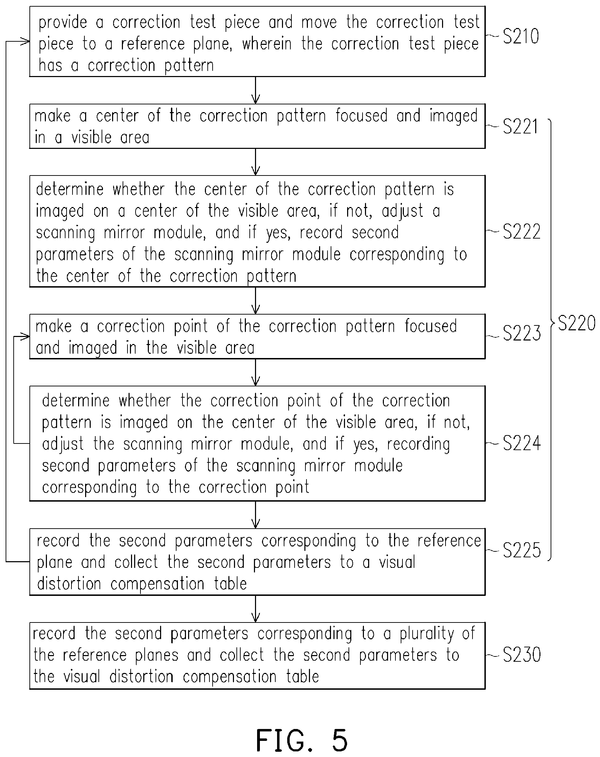

In the following, a method including Steps S210, S220, and S230 is described in detail with reference to FIGs. 5 to 6E.

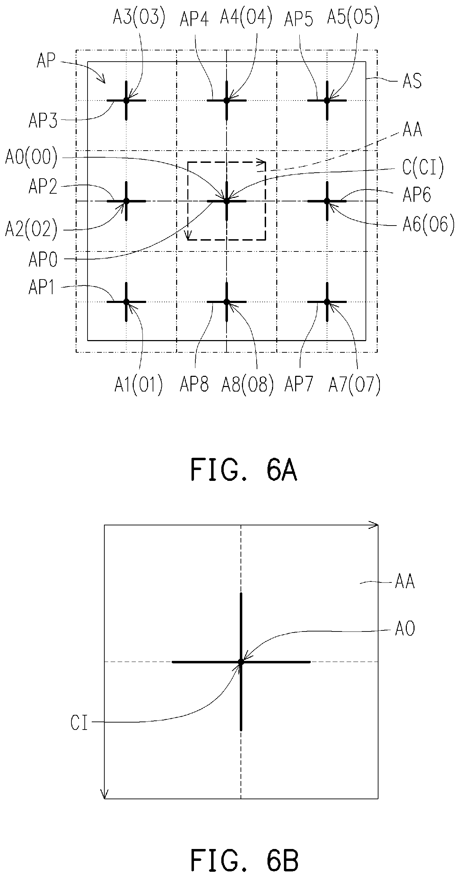

FIG. 5 is a flowchart illustrating a part of the positioning error correction method of FIG. 2. FIG. 6A is a schematic front view illustrating the correction test piece of FIG. 5. Referring to FIGs. 2 and 5, after Steps S110, S120, and S130 are performed to obtain the laser offset compensation table of the three-dimensional working area WA, Step S210 may be performed to provide a correction test piece AS. More specifically, in this embodiment, the correction test piece AS may be manufactured by using an optical glass, for example.

Also, as shown in FIG. 6A, the correction test piece AS has an accurate correction pattern AP, and the correction pattern AP has a plurality of correction points A0, A1, A2, A3, A4, A5, A6, A7, and A8. Specifically, in this embodiment, the correction points A0, A1, A2, A3, A4, A5, A6, A7, and A8 are respectively located in a plurality of sub-correction patterns AP0, AP1, AP2, AP3, AP4, AP5, AP6, AP7, and AP8 of the correction pattern AP. The sub-correction patterns AP0, AP1, AP2, AP3, AP4, AP5, AP6, AP7, and AP8 are symmetrically distributed on the correction test piece AS. In this embodiment, the correction points A0, A1, A2, A3, A4, A5, A6, A7, and A8 are respectively at centers of the sub-correction patterns AP0, AP1, AP2, AP3, AP4, AP5, AP6, AP7, and AP8. However, the disclosure is not limited thereto. People having ordinary skills in the art may design the correction points A0, A1, A2, A3, A4, A5, A6, A7, and A8 based on practical needs, and thus no further details in this regard is described in the following.

Besides, in this embodiment, the sub-correction patterns AP0, AP1, AP2, AP3, AP4, AP5, AP6, AP7, and AP8 are cross-shaped. However, the disclosure is not limited thereto. In other embodiments, the sub-correction patterns AP0, AP1, AP2, AP3, AP4, AP5, AP6, AP7, and AP8 may also be circular, polygonal, or other shapes that are easy to identify, and the sub-correction patterns AP0, AP1, AP2, AP3, AP4, AP5, AP6, AP7, and AP8 may be the same or different. Thus, the disclosure is not limited to the above.

Besides, Step S210 further includes moving the correction test piece AS to the reference plane RF1. For example, in this embodiment, moving the correction test piece AS to the reference plane RF1 may include disposing the correction test piece AS on the surface S of the movable platform 170, such that the correction test piece AS becomes movable to the positions of the reference planes RF1, RF2, and RF3. More specifically, as shown in FIG. 6A, in this embodiment, moving the correction test piece AS to the reference plane RF means that a center C of the correction pattern AP is located at a position O0 of the reference plane RF1 of the three-dimensional working area WA. Also, the correction test piece AS is adjusted, so that at least one correction points, such as the correction point A0, A1, A2, A3, A4, A5, A6, A7, or A8, coincides with at least one position O1, O2, O3, O4, O5, O6, O7, or O8 of the reference plane RF1. In this embodiment, the correction points A0, A1, A2, A3, A4, A5, A6, A7, and A8 respectively coincide with the positions O1, O2, O3, O4, O5, O6, O7, and O8 of the reference plane RF1. However, the disclosure is not limited thereto.

Then, Step S220 is performed to load the laser offset compensation table, read the first parameter when the laser beam 60 is correspondingly focused on the reference plane RF1, and correspondingly adjust a plurality of second parameters of the scanning mirror module 140, so that the correction points of the correction pattern AP are separately and correspondingly focused and imaged on the center of the visible area AA of the image detector 153 through the zoom lens set 130 and the imaging lens set 151. More specifically, as shown in FIG. 5, Step S220 further includes a plurality of Sub-steps S221, S222, S223, S224, and S225. In the following, a method including Sub-steps S221, S222, S223, S224, and S225 of Step S220 is described in detail with reference to FIGs. 6B to 6E.

FIG. 6B is a schematic front view illustrating an image of the sub-correction pattern of FIG. 6A in a visible area. First of all, Sub-step S221 is performed to make the center of the correction pattern AP focused in the visible area AA. More specifically, as shown in FIG. 6B, the center C of the correction pattern AP may be correspondingly focused through the zoom lens set 130 and the imaging lens set 151 to form an image point CI on the visible area AA of the image detector 153. Then, Sub-step S222 is performed to determine whether the center of the correction pattern AP is imaged on a center AO of the visible area AA. Namely, whether the image point CI formed at the center C of the correction pattern AP is located at the center AO of the visible area AA is determined. If not, the second parameters of the scanning mirror module 140 are adjusted.

Specifically, in this embodiment, the second parameters of the scanning mirror module 140 are the angle parameters or position parameters of the reflective mirrors 143 and 145. In theory, there is a corresponding relation between the parameters of the scanning mirror module 140 and a position coordinate of the reference plane PF1 in the three-dimensional working area WA. Thus, images of different areas of the reference plane RF1 may be moved in the visible area AA by adjusting the parameters of the scanning mirror module 140. If it is determined that the image point CI formed by the center of the correction pattern AP is located at the center AO of the visible area AA, the current corresponding second parameters of the scanning mirror module 140 are recorded to manufacture a visual distortion compensation table.

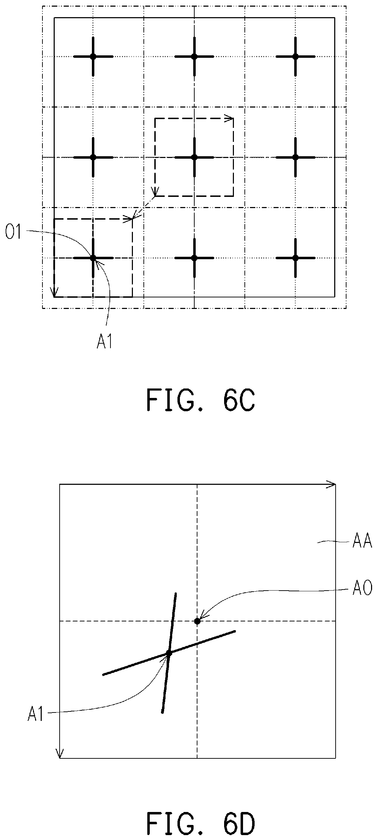

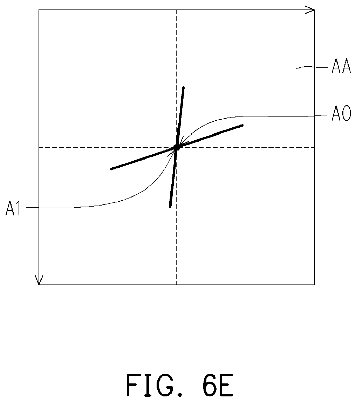

FIG. 6C is a schematic view illustrating a relative movement path of the correction pattern of FIG. 6A between the working area and the visible area. FIGs. 6D and 6E are schematic front views illustrating the image of the sub-correction pattern of FIG. 6A in the visible area. Then, referring to FIG. 6C, Step S223 is performed to adjust the second parameters of the scanning mirror module 140, such that a correction image point AI1 of the correction point A1 at the position O1 is formed in the visible area AA. Then, referring to FIG. 6D, Step S224 is performed to determine whether the position O1 of the correction pattern AP is imaged in the center AO of the visible area AA. Namely, whether the correction image point AI1 of the correction point A1 of the correction pattern AP located at the position O1 formed in the visible area AA is located at the center of the visible area AA is determined. If not, the scanning mirror module 140 is adjusted. If yes, the second parameters of the scanning mirror module 140 corresponding to the position O1 (i.e., the correction point A1) are recorded and collected in the visual distortion compensation table.

Then, in this embodiment, Step S223 and Step S224 may be repetitively performed a plurality of times, and the correction points A0, A1, A2, A3, A4, A5, A6, A7, and A8 in the repetitively performed Step S223 are different from each other, so as to respectively correct the positioning error of areas WA0, WA1, WA2, WA3, WA4, WA5, WA6, WA7, and WA8 of the reference plane RF1. After the correction of an area as required by practical needs, Step S225 may be performed to record the second parameters of the scanning mirror module 140 corresponding to the reference plane RF1 and collect the second parameters to the visual distortion compensation table for further references.

Then, in this embodiment, Steps S210 and S220 (i.e., Sub-steps S221, S222, S223, and S224) may be repetitively performed a plurality of times, and the reference planes RF1, RF2, and RF3 in the repetitively performed Step S210 are different, so as to perform Step S230 to record the second parameters respectively corresponding to the reference planes RF1, RF2, and RF3 and collect the second parameters to the visual distortion compensation table for further references.

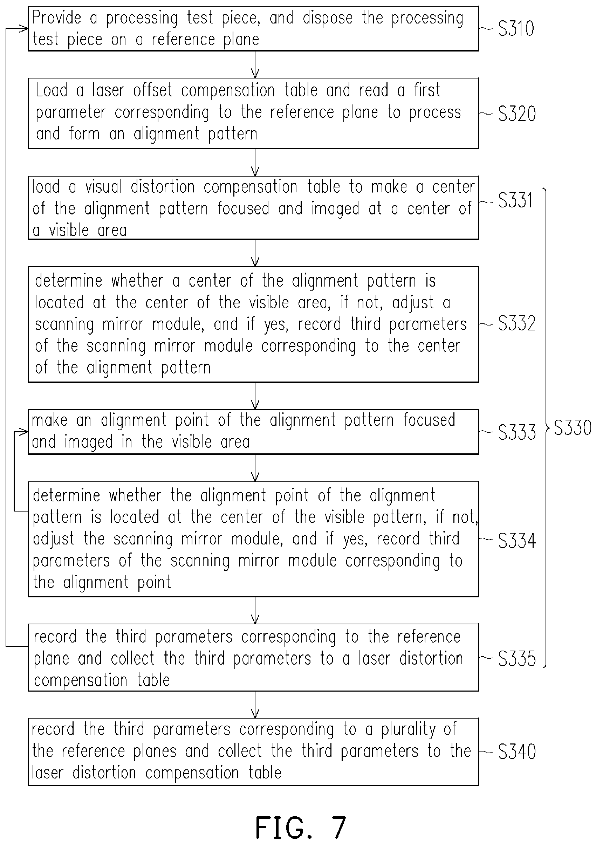

In the following, a method including Steps S310, S320, S330, and S340 is described in detail with reference to FIGs. 7 to 8.

FIG. 7 is a flowchart illustrating a part of the positioning error correction method of FIG. 2. Referring to FIGs. 2, 4, and 7, after Step S230 is performed to obtain the visual distortion compensation table of the three-dimensional working area WA, Step S310 may be performed to provide a processing test piece WS and locate the processing test piece WS on the reference plane RF1. For example, in this embodiment, moving the processing test piece WS to the reference plane RF1 includes moving the processing test piece WS to the surface of the movable platform 170, such that the processing test piece WS is movable to the position of the reference plane RF1.

Then, Step S320 is performed to load the laser offset compensation table and read the corresponding first parameter when the laser beam 60 is focused on the reference plane RF1, so as to process and form an alignment pattern WP. Specifically, in this embodiment, forming the alignment pattern WP includes applying the laser beam 60 emitted by the laser source 110 of the three-dimensional laser processing apparatus 100 shown in FIG. 1 to the processing test piece WS for processing, for example. Furthermore, in this embodiment, the step of forming the alignment pattern WP may be performed by using the scanning mirror module 140 of FIG. 2, for example. More specifically, in this embodiment, after being reflected by the reflective mirrors 143 and 145 of the mirror scanning module 140, the laser beam 60 may be focused on the reference plane RF1 in the three-dimensional working area WA by the focusing lens set 141, so as to process the processing test piece WS to form the alignment pattern WP.

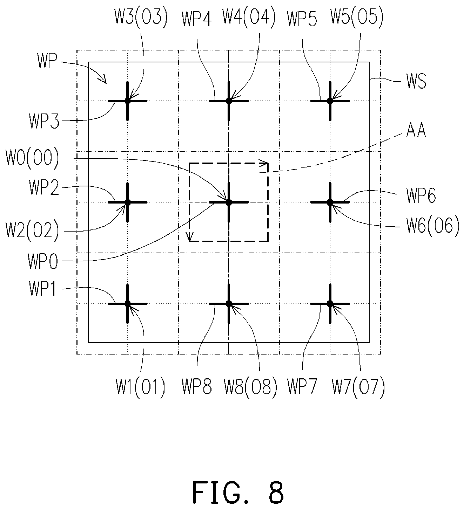

FIG. 8 is a schematic front view illustrating the alignment pattern of FIG. 7. As shown in FIG. 8, in this embodiment, the alignment pattern WP includes a plurality of alignment points W0, W1, W2, W3, W4, W5, W6, W7, and W8. Specifically, in this embodiment, the alignment points W0, W1, W2, W3, W4, W5, W6, W7, and W8 are respectively located on a plurality of sub-alignment patterns WP0, WP1, WP2, WP3, WP4, WP5, WP6, WP7, and WP8 of the alignment pattern WP. The sub-alignment patterns WP0, WP1, WP2, WP3, WP4, WP5, WP6, WP7, and WP8 are symmetrically distributed on the processing test piece WS. In this embodiment, the alignment points W0, W1, W2, W3, W4, W5, W6, W7, and W8 are respectively at centers of the sub-alignment patterns WP0, WP1, WP2, AP3, WP4, WP5, WP6, WP7, and WP8. However, the disclosure is not limited thereto. People having ordinary skills in the art may design the alignment points W0, W1, W2, W3, W4, W5, W6, W7, and W8 based on practical needs, and thus no further details in this regard is described in the following.

Besides, it should be noted that, in this embodiment, the sub-alignment patterns WP0, WP1, WP2, WP3, WP4, WP5, WP6, WP7, and WP8 are cross-shaped. However, the disclosure is not limited thereto. In other embodiments, the sub-alignment patterns WP0, WP1, WP2, WP3, WP4, WP5, WP6, WP7, and WP8 may also be circular, polygonal, or other shapes that are easy to identify, and the sub-alignment patterns WP0, WP1, WP2, WP3, WP4, WP5, WP6, WP7, and WP8 may be the same or different. Thus, the disclosure is not limited to the above.

Then, Step S330 is performed to load the visual distortion compensation table and correspondingly adjust a plurality of third parameters of the scanning mirror module 140. Specifically, in this embodiment, the third parameters of the scanning mirror module 140 are also the angle parameters or position parameters of the reflective mirrors 143 and 145. By adjusting the third parameters of the scanning mirror module 140, the alignment points of the alignment pattern WP are separately and correspondingly focused and imaged on the center of the visible area AA of the image detector 153 through the zoom lens set 130 and the imaging lens set 151. Also, the third parameters are recorded to create a laser distortion compensation table. Here, values recorded in the laser distortion compensation table include the corresponding first parameter of the zoom lens set 130 when the laser beam 60 is focused on the reference plane RF1 and the corresponding third parameters of the scanning mirror module 140 when the alignment points of the alignment pattern WP are correspondingly focused and imaged on the center of the visible area AA of the image detector 153.

More specifically, as shown in FIG. 7, Step S330 further includes Sub-step S331 (i.e., making the center of the alignment pattern WP focused and imaged on the center of the visible area AA), Sub-step S332 (i.e., determining whether the center of the alignment pattern WP is imaged on the center of the visible area AA, if not, adjusting the scanning mirror module 140, and if yes, recording the third parameters of the scanning mirror module 140 corresponding to the center of the alignment pattern WP), Sub-step S333 (i.e., making one of the alignment point of the alignment pattern WP focused and imaged in the visible area AA), and Sub-step S334 (i.e., determining whether the alignment point of the alignment pattern WP is imaged on the center of the visible area AA, if not, adjusting the scanning mirror module 140, and if yes, recording the third parameters of the scanning mirror module 140 corresponding to the alignment point).

Specifically, in this embodiment, performing Step S330 is similar to performing Step S220. Namely, making the alignment point of the alignment pattern WP focused image in the visible area AA and determining and recording the third parameters in Sub-steps S331, S332, S333, and S334 of Step S330 are similar to making the correction point of the correction pattern AP focused in the visible area AA and determining and recording the second parameters in Sub-steps S221, S222, S223, and S224 in Step S220. Details in these respect are already described in the foregoing, and thus not repeated in the following.

Then, in this embodiment, Step S333 and Step S334 may be repetitively performed a plurality of times, and the alignment points W0, W1, W2, W3, W4, W5, W6, W7, and W8 in the repetitively performed Step S333 are different from each other, so as to respectively correct the positioning error in the areas WA0, WA1, WA2, WA3, WA4, WA5, WA6, WA7, and WA8 of the reference plane RF1. After the error in an area as required by practical needs is corrected, Step S335 may be performed to record the third parameters of the scanning mirror module 140 corresponding to the reference planes RF, RF2, and RF3 and collect the third parameters to the laser distortion compensation table for further references.

Then, in this embodiment, Steps S310, S320, and S330 (i.e., Sub-steps S331, S332, S333, and S334) may be repetitively performed a plurality of times, and the reference planes RF1, RF2, and RF3 in the repetitively performed Step S310 are different, so as to perform Step S340 to record the third parameters respectively corresponding to the reference planes RF1, RF2, and RF3 and collect the third parameters to the laser distortion compensation table for further references.

In this way, when the user operates the three-dimensional laser processing apparatus 100 to process a workpiece, relevant parameter and position settings of the three-dimensional laser processing apparatus 100 may be set by using the parameter values of the zoom lens set 130 and the parameter values of the scanning mirror module 140 recorded in the laser distortion compensation table before processing the workpiece. In this way, by using a workpiece image observed from the visible area AA, the laser beam 60 may be controlled to process at a desired position of the workpiece, thereby allowing the three-dimensional laser processing apparatus 100 to achieve "what you see is what you hit" and effectively reducing a visual positioning error and an image computation error to form a three-dimensional laser pattern as desired in the three-dimensional working area WA.

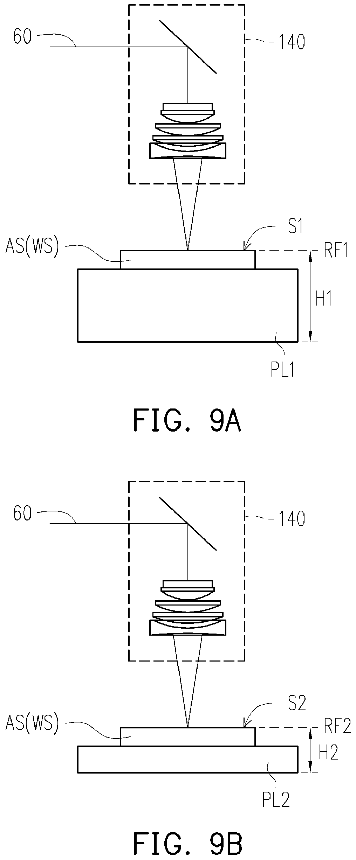

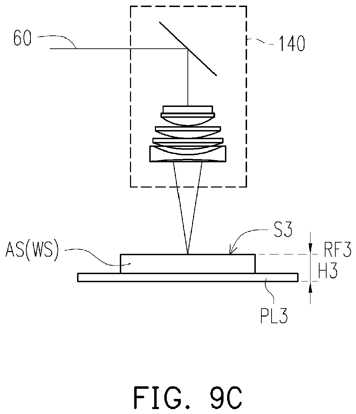

Besides, it should also be noted that, even though the embodiment is described, as an example, to provide the movable platform 170 to make the laser beam 60 correspondingly focused on the respective reference planes RF1, RF2, and RF3 in the three-dimensional working area WA, the disclosure is not limited thereto. Further details are described in the following with reference to FIG. 9A to FIG. 9C.

FIGs. 9A to 9C are schematic side view illustrating another three-dimensional working area of FIG. 1. For example, as shown in FIGs. 9A to 9C, in this embodiment, Step S120, i.e, making the laser beam 60 correspondingly focused on the three-dimensional working area WA, in the positioning error correction method shown in FIG. 2 may also be performed by sequentially providing a plurality of platforms PL1, PL2, and PL3 having different standard heights H1, H2, and H3. In addition, the platforms PL1, PL2, and PL3 are located in the three-dimensional working area WA, and surfaces S1, S2, and S3 of the respective platforms PL1, PL2, and PL3 respectively correspond to the positions of the reference planes RF1, RF2, and RF3. Thus, the laser beam 60 may be sequentially and correspondingly focused on the platform PL1 in the three-dimensional working area WA. Besides, in this embodiment, Steps S210 and S310 in the positioning error correction method shown in FIG. 2 may be performed by changing the platforms PL1, PL2, and PL3 having different standard heights H1, H2, and H3 and disposing the correction test piece AS in Step S210 or the processing test piece WS in Step S310 on the surface of one of the platforms PL1, PL2, and PL3, such that the correction test piece AS in Step S210 or the processing test piece WS in Step S310 is movable to the position of one of the reference planes RF1, RF2, and RF3. Furthermore, when the correction test piece AS of Step S210 or the processing test piece WS of Step S310 is disposed in one of the platforms PL1, PL2, and PL3, the three-dimensional laser processing apparatus 100 may still be used to perform other steps, such as Steps S110, S130, S220, S230, S320, S330, and S340 and create the laser distortion compensation table. Other details are already described above. Thus, relevant details may be referred to above and will not repeated in the following. Accordingly, by performing the positioning error correction method according to this embodiment, the laser distortion compensation table corresponding to the three-dimensional working area may be obtained, and the positioning error may be corrected by adopting relevant parameter or position settings of the three-dimensional laser processing apparatus 100. Thus, the positioning error correction method also exhibits the same features of the previously described visual error correction method. Details in this respect are thus not repeated in the following.

In view of the foregoing, by disposing the zoom lens set and the visual module, the three-dimensional laser processing apparatus according to the embodiments of the disclosure may simultaneously adjust the focal point of the laser beam on the reference plane and the imaging focal point in the visible area when adjusting the parameters of the zoom lens set. Accordingly, the laser beam is correspondingly focused on the reference planes through the zoom lens set and the scanning mirror module. Moreover, a plurality of positions of an image in the three-dimensional working area may also be correspondingly focused and imaged on the center of the visible area through the zoom lens set and the imaging lens set. Besides, when the user operates the three-dimensional laser processing apparatus to process a workpiece, the relevant parameter and position settings of the three-dimensional laser processing apparatus may be set by using value data recorded in the laser distortion compensation table obtained by adopting the positioning error correction method according to the embodiments of the disclosure before processing the workpiece. Accordingly, the three-dimensional laser processing apparatus is capable of providing the effect of "what you see is what you hit" and effectively reducing the positioning error and the image calculation error.

## Claims

1. A positioning error correction method, suitable for correcting a positioning error of a three-dimensional laser processing apparatus (100), the method being **characterized in** comprising:
(a) making a laser beam (60) focused on a three-dimensional working area (WA) through a zoom lens set (130) and a scanning mirror module (140) sequentially, wherein the three-dimensional working area (WA) has a plurality of reference planes (RF1, RF2, RF3), and the reference planes (RF1, RF2, RF3) are perpendicular to a first direction (D1);
(b) adjusting a first parameter of the zoom lens set (130) for one of the reference planes (RF1, RF2, RF3), such that the laser beam (60) is correspondingly focused on the one of the reference planes (RF1, RF2, RF3);
(c) recording the first parameters respectively corresponding to the one of the reference planes (RF1, RF2, RF3) to create a laser offset compensation table;
(d) providing a correction test piece (AS) and moving the correction test piece (AS) to the one of the reference planes (RF1, RF2, RF3), wherein the correction test piece (AS) has a correction pattern (AP);
(e) loading the laser offset compensation table and correspondingly adjusting a plurality of second parameters of the scanning mirror module (140), such that a plurality of correction points (A0-A8) of the correction pattern (AP) are separately and correspondingly focused and imaged on a center of a visible area (AA) of an image detector (153) through the zoom lens set (130) and an imaging lens set (151);
(f) recording the second parameters to create a visual distortion compensation table;
(g) providing a processing test piece and disposing the processing test piece on the one of the reference planes (RF1, RF2, RF3);
(h) loading the laser offset compensation table and reading the first parameter corresponding to the reference plane, so as to process and form an alignment pattern (WP);
(i) loading the visual distortion compensation table and correspondingly adjusting a plurality of third parameters of the scanning mirror module (140), such that a plurality of alignment points (W0-W8) of the alignment pattern (WP) are separately and correspondingly focused and imaged on the center of the visible area (AA) of the image detector (153) through the zoom lens set (130) and the imaging lens set (151); and
(j) recording the third parameters to create a laser distortion compensation table.

2. The positioning error correction method as claimed in claim 1, wherein performing the step (e) further comprises:
making one of the correction points (A0-A8) of the correction pattern (AP) focused and imaged in the visible area (AA);
determining whether the correction point of the correction pattern (AP) is imaged on the center of the visible area (AA), if not, adjusting the scanning mirror module (140), and if yes, recording the second parameter of the scanning mirror module (140) corresponding to the correction point (A0-A8).

3. The positioning error correction method as claimed in claim 1 or 2, wherein performing the step (i) further comprises:
making one of the alignment points (W0-W8) of the alignment pattern (WP) focused and imaged in the visible area (AA);
determining whether the alignment point of the alignment pattern (WP) is imaged on the center of the visible area (AA), if not, adjusting the scanning mirror module (140), if yes, recording the third parameter of the lens scanning module corresponding to the alignment point (W0-W8).

4. The positioning error correction method as claimed in any one of claims 1 to 3, wherein performing the step (c) further comprises: repetitively performing the step (b) a plurality of times, wherein the reference planes (RF1, RF2, RF3) in the repetitively performed step (b) are different, so as to record the first parameters respectively corresponding to the reference planes (RF1, RF2, RF3) and collect the first parameters to the laser offset compensation table.

5. The positioning error correction method as claimed in any one of claims 1 to 4, wherein performing the step (f) further comprises:
repetitively performing step (e) a plurality of times, wherein the reference planes (RF1, RF2, RF3) in the repetitively performed step (e) are different from each other, so as to record the second parameters respectively corresponding to the reference planes (RF1, RF2, RF3) and collect the second parameters to the visual distortion compensation table.

6. The positioning error correction method as claimed in any one of claims 1 to 5, wherein performing the step (j) further comprises:
repetitively performing the steps (g), (h), and (i) a plurality of times, and the reference planes (RF1, RF2, RF3) in the repetitively performed step (g) are different from each other, so as to record the third parameters respectively corresponding to the reference planes (RF1, RF2, RF3) and collect the third parameters to the laser distortion compensation table.

7. The positioning error correction method as claimed in any one of claims 1 to 6, further comprising:
providing a movable platform (170), wherein the movable platform (170) is located in the three-dimensional working area (WA), and a surface of the movable platform (170) is movable along the first direction (D1).

8. The positioning error correction method as claimed in any one of claims 1 to 6, further comprising:
sequentially providing a plurality of platforms (PL1-PL3) having different standard heights, wherein the platforms (PL1-PL3) are located in the three-dimensional working area (WA), and surfaces of the platforms (PL1-PL3) respectively correspond to positions of the reference planes (RF1, RF2, RF3).

9. The positioning error correction method as claimed in any one of claims 1 to 8, wherein the correction pattern (AP) is cross-shaped, circular, or polygonal.

10. The positioning error correction method as claimed in any one of claims 1 to 9, wherein the alignment pattern (WP) is cross-shaped, circular, or polygonal.

11. The positioning error correction method as claimed in any one of claims 1 to 10, wherein the zoom lens set (130) comprises at least two lenses (131, 133), a focal length of one of the lenses (131, 133) is positive, and a focal length of the other of the lenses (131, 133) is negative.

12. The positioning error correction method as claimed in claim 11, wherein the zoom lens set (130) has a lens distance (D), and a length of the lens distance (D) is a sum of the focal lengths of the at least two lenses (131, 133).

13. The positioning error correction method as claimed in claim 11 or 12, wherein the zoom lens set (130) meets 0.1≦|f2/f1|≦10, wherein f1 is the focal length of one of the lenses (131, 133), and f2 is the focal length of the other of the lenses (131, 133).

14. The positioning error correction method as claimed in any one of claims 1 to 13, wherein the first parameter of the zoom lens set (130) is a focal length parameter of the zoom lens set (130).

15. The positioning error correction method as claimed in any one of claims 1 to 14, wherein the scanning mirror module (140) comprises a focusing lens set (141) and two reflective mirrors (143, 145), and the second parameters and the third parameters of the scanning mirror module (140) are angle parameters or position parameters of the reflective mirrors (143, 145).

16. A three-dimensional laser processing apparatus (100), comprising:
a laser source (110), providing a laser beam (60);
a zoom lens set (130), located on a transmitting path of the laser beam (60);
a scanning mirror module (140), located on the transmitting path of the laser beam (60), wherein the laser beam (60) is focused on a three-dimensional working area (WA) through the zoom lens set (130) and the scanning mirror module (140); the three-dimensional laser processing apparatus being **characterized in that** the three-dimensional working area (WA) has a plurality of reference planes (RF1, RF2, RF3), and the reference planes (RF1, RF2, RF3) are perpendicular to a first direction (D1); and **in that** the three-dimensional laser processing apparatus further comprises:
a visual module unit (150), comprising an imaging lens set (151) and an image detector (153), wherein the imaging lens set (151) is located between the three-dimensional working area (WA) and the image detector (153), and the image detector (153) has a visible area (AA); and
a control unit (160), electrically connected to the zoom lens set (130) and the scanning mirror module (140), wherein the control unit (160) repetitively adjusts a first parameter of the zoom lens set (130) and the scanning mirror module (140) for each of the reference planes (RF1, RF2, RF3), such that the laser beam (60) is correspondingly focused on one of the reference planes (RF1, RF2, RF3), and a plurality of positions of an image in the three-dimensional working area (WA) are correspondingly focused and imaged on a center of the visible area (AA) through the zoom lens set (130) and the imaging lens set (151) corresponding to the one of the reference planes (RF1, RF2, RF3).

17. The three-dimensional laser processing apparatus (100) as claimed in claim 16, wherein the zoom lens set (130) comprises at least two lenses (131, 133), a focal length of one of the lenses (131, 133) is positive, and a focal length of the other of the lenses (131, 133) is negative.

18. The three-dimensional laser processing apparatus (100) as claimed in claim 17, wherein the zoom lens set (130) has a lens distance (D), and a length of the lens distance (D) is a sum of the focal lengths of the at least two lenses (131, 133).

19. The three-dimensional laser processing apparatus (100) as claimed in claim 17 or 18, wherein the zoom lens set (130) meets 0.1≦|f2/fl|≦10, wherein f1 is the focal length of one of the lenses (131, 133), and f2 is the focal length of the other of the lenses (131, 133).

20. The three-dimensional laser processing apparatus (100) as claimed in any one of claims 16 to 19, further comprising a movable platform (170) located in the three-dimensional working area (WA), wherein a surface of the movable platform (170) is movable along the first direction (D1), such that the surface is moved to positions of the reference planes (RF1, RF2, RF3),

21. The three-dimensional laser processing apparatus (100) as claimed in any one of claims 16 to 20, wherein the control unit (160) adjusts the zoom lens set (130) by adjusting a focal length parameter of the zoom lens set (130).

22. The three-dimensional laser processing apparatus (100) as claimed in any one of claims 16 to 21, wherein the scanning mirror module (140) comprises:
a focusing lens set (141); and
two reflective mirrors (143, 145), wherein the control unit (160) adjusts the scanning mirror module (140) by adjusting angles or positions of the reflective mirrors (143, 145).

23. The three-dimensional laser processing apparatus (100) as claimed in any one of claims 16 to 22, further comprising:
a light dividing unit (120), located on the transmitting path of the laser beam (60), wherein the laser beam (60) is transmitted to the zoom lens set (130) by the light dividing unit (120).

24. The three-dimensional laser processing apparatus (100) as claimed in any one of claims 16 to 23, wherein the zoom lens set (130) and the visual module unit (150) are in a serially connected structure.

## Patentansprüche

1. Positionierungsfehlerkorrekturverfahren, geeignet für das Korrigieren eines Positionsfehlers einer dreidimensional-Laserbearbeitungsvorrichtung (100), das Verfahren **dadurch gekennzeichnet ist, dass** es umfasst:
(a) Erzeugen eines Laserstrahls (60), welcher auf einem dreidimensionalen Arbeitsbereich (WA) durch einen Vergrößerungslinsensatz (130) und ein Scanspiegelmodul (140) sequentiell fokussiert ist, wobei der dreidimensionale Arbeitsbereich (WA) eine Vielzahl an Referenzebenen (RF1, RF2, RF3) aufweist, und die Referenzebenen (RF1, RF2, RF3) senkrecht zu einer ersten Richtung (D1) sind;
(b) Anpassen eines ersten Parameters des Vergrößcrungslinsensatzes (130) an eine der Referenzebenen (RF1, RF2, RF3), sodass der Laserstrahl (60) auf eine der Referenzebenen (RF1, RF2, RF3) entsprechend fokussiert ist;
(c) Aufzeichnen der ersten Parameter, die jeweils einer der Referenzebenen (RF1, RF2, RF3) entsprechen, um eine Laser-Offset-Kompensationstabelle zu erstellen;
(d) Bereitstellen eines Korrekturprüfkörpers (AS) und Bewegen des Korrekturprüfkörpers (AS) zu einer der Referenzebenen (RF1, RF2, RF3), wobei der Korrekturprüfkörper (AS) ein Korrekturmuster (AP) hat;
(e) Laden der Laser-Offset-Kompensationstabelle und entsprechendes Anpassen einer Vielzahl von zweiten Parametern des Scanspiegelmoduls (140), sodass eine Vielzahl an Korrekturpunkten (A0-A8) des Korrekturmusters (AP) einzeln und entsprechend fokussiert sind und durch den Vergrößerungslinsensatz (130) und einen Bildgebungslinsensatz (151) auf einem Zentrum eines sichtbaren Bereichs (AA) eines Bilddetektors (153) abgebildet sind;
(f) Aufzeichnen der zweiten Parameter, um eine visuelle Verzerrungskompensationstabelle zu erstellen;
(g) Bereitstellen eines Verarbeitungsprüfkörpers und Anbringen des Verarbeitungsprüfkörpers auf eine der Referenzebenen (RF1, RF2, RF3);
(h) Laden der Laser-Offset-Kompensationstabelle und Lesen der ersten Parameter der Referenzebene entsprechend, um ein Ausrichtungsmuster (WP) zu verarbeiten und auszubilden.
(i) Laden der visuellen Verzerrungskompensationstabelle und jeweiliges Anpassen einer Vielzahl von dritten Parametern des Scanspiegelmoduls (140), sodass eine Vielzahl an Ausrichtungspunkten (W0-W8) des Ausrichtungsmusters (WP) einzeln und entsprechend fokussiert sind und durch den Vergrößerungslinsensatz (130) und den Bildgebungslinsensatz (151) im Zentrum des sichtbaren Bereichs (AA) des Bilddetektors (153) abgebildet sind; und
(j) Aufzeichnen des dritten Parameters, um eine Laserverzerrungskompensationstabelle zu erstellen.

2. Positionsfehlerkorrekturverfahren gemäß Anspruch 1, wobei das Ausführen von Schritt (e) weiterhin umfasst:
Erzeugen eines der Korrekturpunkte (A0-A8) des Korrekturmusters (AP), die im sichtbaren Bereich (AA) fokussiert und abgebildet sind;
Festlegen, ob der Korrekturpunkt des Korrekturmusters (AP) im Zentrum des sichtbaren Bereichs (AA) abgebildet ist, falls nicht,
Anpassen des Scanspiegelmoduls (140), und falls ja, Aufzeichnen des zweiten Parameters des Scanspiegelmoduls (140) dem Korrekturpunkt (A0-A8) entsprechend.

3. Positionsfehlerkorrekturverfahren gemäß Anspruch 1 oder 2, wobei das Ausführen von Schritt (i) weiterhin umfasst:
Erzeugen eines der Korrekturpunkte (A0-A8) des Ausrichtungsmusters (WP), die im sichtbaren Bereich (AA) fokussiert und abgebildet sind;
Festlegen, ob der Ausrichtungspunkt des Ausrichtungsmusters (WP) im Zentrum des sichtbaren Bereichs (AA) abgebildet wird, falls nicht, Anpassen des Scanspiegelmoduls (140), falls ja, Aufzeichnen des dritten Parameters des Linsen-Scan-Moduls dem Ausrichtungspunkt (W0-W8) entsprechend.

4. Positionsfehlerkorrekturverfahren gemäß irgendeinem der Ansprüche 1 bis 3, wobei das Ausführen von Schritt (c) weiterhin umfasst:
mehrmaliges, wiederholtes Ausführen von Schritt (b), wobei die Referenzebenen (RF1, RF2, RF3) in dem wiederholt ausgeführten Schritt (b) unterschiedlich sind, um die ersten Parameter jeweils den Referenzebenen (RF1, RF2, RF3) entsprechend aufzuzeichnen und um die ersten Parameter in der Laser-Offset-Kompensationstabelle zu sammeln.

5. Positionsfehlerkorrekturverfahren gemäß irgendeinem der Ansprüche 1 bis 4, wobei das Ausführen von Schritt (f) weiterhin umfasst:
mehrmaliges, wiederholtes Ausführen von Schritt (e) wobei die Referenzebenen (RF1, RF2, RF3) in dem wiederholt ausgeführten Schritt (e) voneinander verschieden sind, um die zweiten Parameter jeweils den Referenzebenen (RF1, RF2, RF3) entsprechend aufzuzeichnen und um die zweiten Parameter in der visuellen Verzerrungskompensationstabelle zu sammeln.

6. Positionsfehlerkorrekturverfahren gemäß irgendeinem der Ansprüche 1 bis 5, wobei das Ausführen von Schritt (j) weiterhin umfasst:
mehrmaliges, wiederholtes Ausführen der Schritte (g), (h), und (i), und die Referenzebenen (RF1, RF2, RF3) in dem wiederholt ausgeführten Schritt (g) voneinander verschieden sind, um die dritten Parameter jeweils den Referenzebenen (RF1, RF2, RF3) entsprechend aufzuzeichnen und um die dritten Parameter in der Laserverzerrungskompensationstabelle zu sammeln.

7. Positionsfehlerkorrekturverfahren gemäß irgendeinem der Ansprüche 1 bis 6, weiterhin umfassend:
Bereitstellen einer beweglichen Plattform (170), wobei die bewegliche Plattform (170) in dem dreidimensionalen Arbeitsbereich (WA) angeordnet ist, und eine Fläche der beweglichen Plattform (170) entlang der ersten Richtung (D1) beweglich ist.

8. Positionsfehlerkorrekturverfahren gemäß jedem der Ansprüche 1 bis 6, weiterhin umfassend:
sequenzielles Bereitstellen einer Vielzahl an Plattformen (PL1-PL3), die verschiedene Standardhöhen haben, wobei die Plattformen (PL1-PL3) in dem dreidimensionalen Arbeitsbereich (WA) angeordnet sind, und die Flächen der Plattformen (PL1-PL3) jeweils den Positionen der Referenzebenen (RF1, RF2, RF3) entsprechen.

9. Positionsfehlerkorrekturverfahren gemäß irgendeinem der Ansprüche 1 bis 8, wobei das Korrekturmuster (AP) kreuzförmig, kreisförmig oder polygonal ist.

10. Positionsfehlerkorrekturverfahren gemäß irgendeinem der Ansprüche 1 bis 9, wobei das Ausrichtungsmuster (AP) kreuzförmig, kreisförmig oder polygonal ist.

11. Positionsfehlerkorrekturverfahren gemäß irgendeinem der Ansprüche 1 bis 10, wobei der Vergrößerungslinsensatz (130) wenigstens zwei Linsen (131, 133) umfasst, eine Brennweite einer der Linsen (131, 133) positiv ist, und eine Brennweite einer der anderen Linsen (131, 133) negativ ist.

12. Positionsfehlerkorrekturverfahren gemäß Anspruch 11, wobei der Vergrößerungslinsensatz (130) einen Linsenabstand (D) hat, und eine Länge des Objektivabstands (D) eine Summe der Brennweiten von mindestens zwei Linsen (131, 133) ist.

13. Positionsfehlerkorrekturverfahren gemäß Anspruch 11 oder 12, wobei der Vergrößerungslinsensatz (130) 0,1≦|f2/f1|≦10 erfüllt, wobei f1 die Brennweite einer der Linsen (131, 133) ist und f2 die Brennweite einer der anderen der Linsen (131, 133) ist.

14. Positionsfehlerkorrekturverfahren gemäß irgendeinem der Ansprüche 1 bis 13, wobei der erste Parameter des Vergrößerungslinsensatzes (130) ein Brennweiten Parameter des Vergrößerungslinsensatzes (130) ist.

15. Positionsfehlerkorrekturverfahren gemäß irgendeinem der Ansprüche 1 bis 14, wobei das Scanspiegelmodul (140) einen Fokussierlinsensatz (141) und zwei reflektierende Spiegel (143, 145) umfasst, und die zweiten Parameter und die dritten Parameter des Scanspiegelmoduls (140) Winkelparameter oder Positionsparameter der reflektierende Spiegel (143, 145) sind.

16. Dreidimensional-Laserbearbeitungsvonichtung (100), umfassend:
eine Laserquelle (110), welche einen Laserstrahl (60) bereitstellt; einen Vergrößerungslinsensatz (130), der auf dem Übertragungspfad des Laserstrahls (60) angeordnet ist; ein Scanspiegelmodul (140), welches auf den Übertragungspfad des Laserstrahls (60) angeordnet ist, wobei der Laserstrahl (60) auf die dreidimensionale Arbeitsbereich (WA) durch den Vergrößerungslinsensatz (130) und das Scanspiegelmodul (140) fokussiert ist; wobei die dreidimensional-Laserbearbeitungsvorrichtung **dadurch gekennzeichnet ist, dass** die dreidimensionale Arbeitsbereich (WA) eine Vielzahl an Referenzebenen (RF1, RF2, RF3) aufweist und die Referenzebenen (RF1, RF2, RF3) senkrecht zu einer ersten Richtung (D1) sind; und dadurch, dass die dreidimensionale Laserbearbeitungsvorrichtung weiterhin umfasst:
eine visuelle Moduleinheit (150), einen Bildgebungslinsensatz (151) und einen Bilddetektor (153) umfassend, wobei der Bildgebungslinsensatz (151) zwischen der dreidimensionalen Arbeitsbereich (WA) und dem Bilddetektor (153) angeordnet ist, und der Bilddetektor (153) einen sichtbaren Bereich (AA) hat; und
eine Steuereinheit (160), welche mit dem Vergrößerungslinsensatz (130) und dem Scanspiegelmodul (140) elektrisch verbunden ist, wobei die Steuereinheit (160) wiederholt einen ersten Parameter des Vergrößerungslinsensatz (130) und des Scanspiegelmoduls (140) für jede Referenzebene (RF1, RF2, RF3) einstellt, sodass der Laserstrahl (60) auf eine der Referenzebenen (RF1, RF2, RF3) entsprechend fokussiert ist, und eine Vielzahl an Positionen eines Bildes in einem dreidimensionalen Arbeitsbereich (WA) entsprechend fokussiert sind und in einem Zentrum des sichtbaren Bereichs (AA) durch den Vergrößerungslinsensatz (130) und den Bildgebungslinsensatz (151) einer der Referenzebenen (RF1, RF2, RF3) entsprechend abgebildet sind.

17. Dreidimensional-Laserbearbeitungsvorrichtung (100) gemäß Anspruch 16, wobei der Vergrößerungslinsensatz (130) wenigstens zwei Linsen (131, 133) umfasst, wobei eine Brennweite der einen der Linsen (131, 133) positiv ist, und eine Brennweite der anderen der Linsen (131, 133) negativ ist.

18. Dreidimensionale Laserbearbeitungsvorrichtung (100) gemäß Anspruch 17, wobei der Vergrößerungslinsensatz (130) einen Linsenabstand (D) hat, und eine Länge des Abstands D eine Summe der Brennweiten von wenigstens zwei Linsen (131, 133) ist.

19. Dreidimensionale Laserbearbeitungsvorrichtung (100) gemäß Anspruch 17 oder 18, wobei der Vergrößerungslinsensatz (130) 0.1≦|f2/f1|≦10 erfüllt, wobei f1 die Brennweite einer der Linsen (131,133) ist, und f2 die Brennweite einer der anderen der Linsen (131,133) ist.

20. Dreidimensionale Laserbearbeitungsvorrichtung (100) gemäß Anspruch 16 bis 19, weiterhin eine bewegliche Plattform (170) umfassend, welche in dem dreidimensionalen Arbeitsbereich (WA) angeordnet ist, wobei eine Fläche der beweglichen Plattform (170) entlang der ersten Richtung (D1) beweglich ist, sodass die Fläche zu Positionen der Referenzebenen (RF1, RF2, RF3) bewegt wird.

21. Dreidimensional-Laserbearbeitungsvorrichtung (100) gemäß Anspruch 16 bis 20, wobei die Steuereinheit (160) den Vergrößerungslinsensatz (130) durch Anpassen eines Brennweitenparameters des Vergrößerungslinsensatz (130) anpasst.

22. Dreidimensional-Laserbearbeitungsvorrichtung (100) gemäß irgendeinem der Ansprüche 16 bis 21, wobei das Scanspiegelmodul (140) umfasst:
einen Fokussierlinsensatz (141); und zwei reflektierende Spiegel (143, 145), wobei die Steuereinheit (160) das Scanspiegelmodul (140) durch Anpassen von Winkeln oder Positionen der reflektierenden Spiegel (143, 145) anpasst.

23. Dreidimensional-Laserbearbeitungsvorrichtung (100) gemäß irgendeinem der Ansprüche 16 bis 22, weiterhin umfassend:
eine Lichtteilungseinheit (120), welche auf dem Übertragungspfad des Laserstrahls (60) angeordnet ist, wobei der Laserstrahl (60) auf den Vergrößerungslinsensatz (130) durch die Lichtteilungseinheit (120) übertragen wird.

24. Dreidimensional-Laserbearbeitungsvorrichtung (100) gemäß irgendeinem der Ansprüche 16 bis 23, wobei der Vergrößerungslinsensatz (130) und die visuelle Moduleinheit (150) in einer seriell verbundenen Struktur sind.

## Revendications

1. Procédé de correction d'erreur de positionnement, adapté pour corriger une erreur de positionnement d'un appareil de traitement laser tridimensionnel (100), le procédé **se caractérisant en ce qu'**il comprend :
(a) focaliser un faisceau laser (60) sur une zone de travail tridimensionnelle (WA) à travers un ensemble de lentilles à focale variable (130) et un module de miroir de balayage (140), séquentiellement, dans lequel la zone de travail tridimensionnelle (WA) a une pluralité de plans de référence (RF1, FR2, RF3), et les plans de référence (RF1, RF2, RF3) sont perpendiculaires à une première direction (D1) ;
(b) régler un premier paramètre de l'ensemble de lentilles à focale variable (130) pour l'un des plans de référence (RF1, RF2, RF3) de sorte que le faisceau laser (60) est focalisé de manière correspondante sur ce plan des plans de référence (RF1, RF2, RF3) ;
(c) enregistrer les premiers paramètres correspondants respectivement à ce plan des plans de référence (RF1, RF2, RF3) pour créer une table de compensation de décalage laser ;
(d) fournir une pièce d'essai de correction (AS) et déplacer la pièce d'essai de correction (AS) vers ce plan des plans de référence (RF1, RF2, RF3), dans lequel la pièce d'essai de correction (AS) a un motif de correction (AP) ;
(e) charger la table de compensation de décalage laser et régler de manière correspondante une pluralité de deuxièmes paramètres du module de miroir de balayage (140) de sorte qu'une pluralité de points de correction (A0-A8) du motif de correction (AP) sont séparés et focalisés de manière correspondante et mis en image sur un centre d'une zone visible (AA) d'un détecteur d'image (153) à travers l'ensemble de lentilles à focale variable (130) et un ensemble de lentilles d'imagerie (151) ;
(f) enregistrer les deuxièmes paramètres pour créer une table de compensation de distorsion visuelle ;
(g) fournir une pièce d'essai de traitement et disposer la pièce d'essai de traitement sur ce plan des plans de référence (RF1, RF2, RF3) ;
(h) charger la table de compensation de décalage laser et lire le premier paramètre correspondant au plan de référence de manière à usiner et former un motif d'alignement (WP) ;
(i) charger la table de compensation de distorsion visuelle et régler de manière correspondante une pluralité de troisièmes paramètres du module de miroir de balayage (140) de sorte qu'une pluralité de points d'alignement (W0-W8) du motif d'alignement (WP) sont focalisés séparément et de manière correspondante et mis en image au centre de la zone visible (AA) du détecteur d'image (153) à travers l'ensemble de lentilles à focale variable (130) et l'ensemble de lentilles d'imagerie (151) ; et
(j) enregistrer les troisièmes paramètres pour créer une table de compensation de distorsion laser.

2. Procédé de correction d'erreur de positionnement tel que revendiqué dans la revendication 1, dans lequel la réalisation de l'étape (e) comprend en outre :
rendre l'un des points de correction (A0-A8) du motif de correction (AP) focalisé et mis en image dans la zone visible (AA) ;
déterminer si le point de correction du motif de correction (AP) est mis en image au centre de la zone visible (AA), si ce n'est pas le cas, régler le module de miroir de balayage (140), et si c'est le cas, enregistrer le deuxième paramètre du module de miroir de balayage (140) correspondant au point de correction (A0-A8).

3. Procédé de correction d'erreur de positionnement tel que revendiqué par la revendication 1 ou 2, dans lequel la réalisation de l'étape (i) comprend en outre :
rendre l'un des points d'alignement (W0-W8) du motif d'alignement (WP) focalisé et mis en image dans la zone visible (AA) ;
déterminer si le point d'alignement du motif d'alignement (WP) est mis en image au centre de la zone visible (AA), si ce n'est pas le cas, régler le module de miroir de balayage (140), si c'est le cas, enregistrer le troisième paramètre du module de balayage de lentille correspondant au point d'alignement (W0-W8).

4. Procédé de correction d'erreur de positionnement tel que revendiqué dans l'une quelconque des revendications 1 à 3, dans lequel la réalisation de l'étape (c) comprend en outre : la réalisation répétée de l'étape (b) plusieurs fois, dans lequel les plans de référence (RF1, RF2, RF3) dans l'étape (b) réalisée répétitivement sont différents, de manière à enregistrer les premiers paramètres correspondant respectivement aux plans de référence (RF1, RF2, RF3) et recueillir les premiers paramètres dans la table de compensation de décalage laser.

5. Procédé de correction d'erreur de positionnement tel que revendiqué dans l'une quelconque des revendications 1 à 4, dans lequel la réalisation de l'étape (f) comprend en outre :
la réalisation répétitive de l'étape (e) plusieurs fois, dans lequel les plans de référence (RF1, RF2, RF3) dans l'étape (e) réalisée répétitivement sont différents les uns des autres, de manière à enregistrer les deuxièmes paramètres correspondant respectivement aux plans de référence (RF1, RF2, RF3) et recueillir les deuxièmes paramètres dans la table de compensation de distorsion visuelle.

6. Procédé de correction d'erreur de positionnement tel que revendiqué dans l'une quelconque des revendications 1 à 5, dans lequel la réalisation de l'étape (j) comprend en outre :
la réalisation de manière répétée des étapes (g), (h) et (i) plusieurs fois, et les plans de référence (RF1, RF2, RF3) dans l'étape (g) réalisée répétitivement étant différents les uns des autres, de manière à enregistrer les troisièmes paramètres correspondant respectivement aux plans de référence (RF1, RF2, RF3) et recueillir les troisièmes paramètres dans la table de compensation de distorsion laser.

7. Procédé de correction d'erreur de positionnement tel que revendiqué dans l'une quelconque des revendications 1 à 6, comprenant en outre :
la fourniture d'une plateforme mobile (170), dans lequel la plateforme mobile (170) est située dans la zone de travail tridimensionnelle (WA), et une surface de la plateforme mobile (170) est mobile le long de la première direction (D1).

8. Procédé de correction d'erreur de positionnement tel que revendiqué dans l'une quelconque des revendications 1 à 6, comprenant en outre :
la fourniture séquentielle d'une pluralité de plateformes (PL1-PL3) ayant différentes hauteurs standard, dans lequel les plateformes (PL1-PL3) sont situées dans la zone de travail tridimensionnelle (WA), et des surfaces des plateformes (PL1-PL3) correspondent respectivement à des positions des plans de référence (RF1, RF2, RF3).

9. Procédé de correction d'erreur de positionnement tel que revendiqué dans l'une quelconque des revendications 1 à 8, dans lequel le motif de correction (AP) est en forme de croix, circulaire, ou polygonal.

10. Procédé de correction d'erreur de positionnement tel que revendiqué dans l'une quelconque des revendications 1 à 9, dans lequel le motif d'alignement (WP) est en forme de croix, circulaire, ou polygonal.

11. Procédé de correction d'erreur de positionnement tel que revendiqué dans l'une quelconque des revendications 1 à 10, dans lequel l'ensemble de lentilles à focale variable (130) comprend au moins deux lentilles (131, 133), une distance focale de l'une des lentilles (131, 133) est positive, et une distance focale de l'autre des lentilles (131, 133) est négative.

12. Procédé de correction d'erreur de positionnement tel que revendiqué dans la revendication 11, dans lequel l'ensemble de lentilles à focale variable (130) a une distance de lentilles (D), et une longueur de la distance de lentilles (D) est une somme des distances focales des au moins deux lentilles (131, 133).

13. Procédé de correction d'erreur de positionnement tel que revendiqué dans la revendication 11 ou 12, dans lequel l'ensemble de lentilles à focale variable (130) satisfait à 0,1≦|f2/f1|≦10, dans lequel f1 est la distance focale de l'une des lentilles (131, 133), et f2 est la distance focale de l'autre des lentilles (131, 133) .

14. Procédé de correction d'erreur de positionnement tel que revendiqué dans l'une quelconque des revendications 1 à 13, dans lequel le première paramètre de l'ensemble de lentilles à focale variable (130) est un paramètre de distance focale de l'ensemble de lentilles à focale variable (130).

15. Procédé de correction d'erreur de positionnement tel que revendiqué dans l'une quelconque des revendications 1 à 14, dans lequel le module de miroir de balayage (140) comprend un ensemble de lentilles de focalisation (141) et deux miroirs réfléchissants (143, 145), et les deuxièmes paramètres et les troisièmes paramètres du module de miroir de balayage (140) sont des paramètres d'angle ou des paramètres de position des miroirs réfléchissants (143, 145).

16. Appareil de traitement laser tridimensionnel (100), comprenant :
une source laser (110) fournissant un faisceau laser (60) ;
un ensemble de lentilles à focale variable (130) situé sur un trajet de transmission du faisceau laser (60) ;
un module de miroir de balayage (140) situé sur le trajet de transmission du faisceau laser (60), dans lequel le faisceau laser (60) est focalisé sur une zone de travail tridimensionnelle (WA) à travers l'ensemble de lentilles à focale variable (130) et le module de miroir de balayage (140) ;
l'appareil de traitement laser tridimensionnel étant **caractérisé en ce que**
la zone de travail tridimensionnelle (WA) a une pluralité de plans de référence (RF1, RF2, RF3), et les plans de référence (RF1, RF2, RF3) sont perpendiculaires à une première direction (D1) ; et
**en ce que** l'appareil de traitement laser tridimensionnel comprend en outre :
une unité de module visuel (150) comprenant un ensemble de lentilles d'imagerie (151) et un détecteur d'image (153), dans lequel l'ensemble de lentilles d'imagerie (151) est situé entre la zone de travail tridimensionnelle (WA) et le détecteur d'image (153), et le détecteur d'image (153) a une zone visible (AA) ; et
une unité de contrôle (160), connectée électriquement à l'ensemble de lentilles à focale variable (130) et au module de miroir de balayage (140), dans lequel l'unité de contrôle (160) règle répétitivement un premier paramètre de l'ensemble de lentilles à focale variable (130) et du module de miroir de balayage (140) pour chacun des plans de référence (RF1, RF2, RF3) de sorte que le faisceau laser (60) est focalisé de manière correspondante sur l'un des plans de référence (RF1, RF2, RF3), et une pluralité de positions d'une image dans la zone de travail tridimensionnelle (WA) sont focalisées de manière correspondante et mises en image sur un centre de la zone visible (AA) à travers l'ensemble de lentilles à focale variable (130) et l'ensemble de lentilles d'imagerie (151) correspondant à ce plan des plans de référence (RF1, RF2, RF3).

17. Appareil de traitement laser tridimensionnel (100) tel que revendiqué dans la revendication 16,
dans lequel l'ensemble de lentilles à focale variable (130) comprend au moins deux lentilles (131, 133), une distance focale de l'une des lentilles (131, 133) est positive, et une distance focale de l'autre des lentilles (131, 133) est négative.

18. Appareil de traitement laser tridimensionnel (100) tel que revendiqué dans la revendication 17,
dans lequel l'ensemble de lentilles à focale variable (130) a une distance de lentilles (D), et une longueur de la distance de lentilles (D) est une somme des distances focales des au moins deux lentilles (131, 133).

19. Appareil de traitement laser tridimensionnel (100) tel que revendiqué dans la revendication 17 ou 18,
dans lequel l'ensemble de lentilles à focale variable satisfait à 0,1≦|f2/f1|≦10, dans lequel f1 est la distance focale de l'une des lentilles (131, 133), et f2 est la distance focale de l'autre des lentilles (131, 133).

20. Appareil de traitement laser tridimensionnel (100) tel que revendiqué dans l'une quelconque des revendications 16 à 19,
comprenant en outre une plateforme mobile (170) située dans la zone de travail tridimensionnelle (WA), dans lequel une surface de la plateforme mobile (170) est mobile le long de la première direction (D1) de sorte que la surface est déplacée dans des positions des plans de référence (RF1, RF2, RF3) .

21. Appareil de traitement laser tridimensionnel (100) tel que revendiqué dans l'une quelconque des revendications 16 à 20,
dans lequel l'unité de contrôle (160) règle l'ensemble de lentilles à focale variable (130) en réglant un paramètre de distance focale de l'ensemble de lentilles à focale variable (130).

22. Appareil de traitement laser tridimensionnel (100) tel que revendiqué dans l'une quelconque des revendications 16 à 21,
dans lequel le module de miroir de balayage (140) comprend :
un ensemble de lentilles de focalisation (141) ; et deux miroirs réfléchissants (143, 145), dans lequel l'unité de contrôle (160) règle le module de miroir de balayage (140) en réglant des angles ou positions des miroirs réfléchissants (143, 145).

23. Appareil de traitement laser tridimensionnel (100) tel que revendiqué dans l'une quelconque des revendications 16 à 22, comprenant en outre :
une unité de séparation de lumière (120) située sur le trajet de transmission du faisceau laser (60), dans lequel le faisceau laser (60) est transmis à l'ensemble de lentilles à focale variable (130) par l'unité de séparation de lumière (120).

24. Appareil de traitement laser tridimensionnel (100) tel que revendiqué dans l'une quelconque des revendications 16 à 23,
dans lequel l'ensemble de lentilles à focale variable (130) et l'unité de module visuel (150) sont en une structure connectée en série.
